# EUROPEAN PATENT SPECIFICATION

(11) **EP 1 191 004 B1**
(45) Date of publication and mention of the grant of the patent: **29.09.2004**
(21) Application number: 01118494.2
(22) Date of filing: 01.08.2001
(51) Int. Cl.: C04B 41/48

(54) **Compositions for the restoration of concrete**
Zusammensetzungen für die Restaurierung von Beton
Compositions pour restaurer de beton

(30) Priority: 03.08.2000 IT MI001814
(43) Date of publication of application: 27.03.2002
(73) Proprietor: MINISTERO DELL' UNIVERSITA' E DELLA RICERCA SCIENTIFICA E TECNOLOGICA, 00144 Roma (IT)
(72) Inventor: Goisis, Marco, 24124 Bergamo (IT); Arcozzi, Antonio, 20090 Pantigliate ( Mi) (IT); Marchese Giuseppe,, 80046 San Giorgio a Cremano (NA) (IT)
(74) Representative: Gervasi, Gemma, Dr.

(56) References cited:
- US-A- 3 567 496
- US-A- 3 861 944
- US-A- 5 232 983

## Description

### FIELD OF THE INVENTION

The present invention concerns formulations comprising one or more methacrylic monomers for the restoration and repair of worn surfaces of concrete elements in situ.

### STATE OF THE ART

The impregnation of concrete elements with monomers, subsequently polymerised in situ (PIC technology), was intensively developed in the U.S.A., Japan and Europe in the 60s and 70s (cf. e.g. US-A-3567496).

The resulting improvement in the mechanical strength and durability of mortar and concrete impregnated as above is due basically to the fact that the polymerised monomer fills the pores in the material.

The most commonly described and used monomers include acrylic epoxy and styrenic monomers.

Methyl methacrylate (MMA) is the monomer that has been most widely tested. This monomer is characterised by a very low viscosity, thus permitting good penetration into the concrete but it also has undesired properties such as low flash point, high volatility and a very unpleasant smell. Its industrial application has therefore been limited for technical, environmental, health and safety reasons.

Products based on methacrylic monomers with a high molecular weight that overcome the limits of MMA are described in scientific literature. On the other hand, however, the viscosity of these formulations is approximately one order of magnitude greater than that of MMA and consequently their penetration into the concrete and degree of cortical reinforcement is limited.

The literature on restoration of worn concrete elements describes a simultaneous reinforcing and waterproofing action achieved via the use of formulations with fairly low application times, in particular at high ambient temperatures. This limits penetration of the monomer into the element and consequently its consolidation action.

Literature also describes formulations based on methacrylic monomers with a high molecular weight with glass transition temperature between 30°C and 50°C; said formulations are consequently defective as regards cortical reinforcement when there are high external temperatures and the element is directly heated by the sun.

There was therefore a need to develop formulations for the restoration of worn concrete elements able to improve cortical consolidation as a result of reduced viscosity, increased application time (particularly with high ambient temperatures) and higher glass transition temperature while at the same time guaranteeing low environmental impact and easy handling.

### SUMMARY

It has now been discovered that the phenomenon of cortical consolidation and waterproofing do not depend only on the effect of polymerisation in situ but also on the chemical-physical characteristics of the methacrylic monomers used.

The Applicant has unexpectedly and surprisingly identified formulations based on methacrylic monomers for the cortical consolidation of worn concrete elements; said formulations, due to their physico-chemical characteristics, overcome the limits and disadvantages of the formulations currently used for the recovery of worn concrete elements.

### DETAILED DESCRIPTION OF THE INVENTION

The present invention therefore concerns formulations for the cortical consolidation of worn concrete elements comprising a mixture of mono- and polyfunctional methacrylic monomers with molecular weight greater than 150 Daltons, with a viscosity η from 0.5 to 2 mPa·s measured with a Brookfield viscosimeter, impeller 2, 30 revolutions per minute (r.p.m.) at a temperature of 20±1°C, and a polymerisation initiator system, able to act at ambient temperature, preferably at a temperature above 20°C, comprising an initiator and an accelerator. These formulations have a further characteristic physico-chemical property: the glass transition temperature (Tg) after polymerisation is above 60°C, preferably above 70°C and even more preferably above 100°C.

In the formulations according to the present invention concerning mono- and polyfunctional methacrylic monomers, the monofunctional methacrylic monomers have a viscosity η of between 0.5 and 5 mPa·s (η measured with a Brookfield viscosimeter, impeller 2, 30 revolutions per minute (r.p.m.) at a temperature of 23±1°C), and are mixed with at least one polyfunctional methacrylic monomer with viscosity η between 0.5 and 8 mPa·s (η measured with a Brookfield viscosimeter, impeller 2, 30 revolutions per minute (r.p.m.) at a temperature of 23±1°C).

According to the present invention, the preferred monofunctional methacrylic monomers are those chosen from the group consisting of tetrahydrofurfuryl methacrylate (THFMA), dicyclopentenyloxyethyl methacrylate (DCPOEMA) and isobornyl methacrylate (MISOBOR) while the preferred polyfunctional methacrylic monomers are chosen from the group consisting of trimethylolpropane trimethacrylate (TMPTMA), ethylene glycol dimethacrylate (EGDMA) and butyl ethylene glycol dimethacrylate (BGDMA).

The formulations subject of the present invention comprise as polymerisation initiator system preferably a system in which the initiator is an organic peroxide in a quantity from 2 to 5 parts in weight of active material out of 100 parts of mono-and polyfunctional monomer (phm), and the accelerator is a compound of cobalt in a quantity from 0.05 to 0.2 parts in weight of active material out of 100 parts of mono- and polyfunctional monomer (phm).

The peroxide initiator is preferably cumene hydroperoxide and the accelerator is chosen from the group consisting of cobalt naphthenate, cobalt-2-ethylhexanoate in an aliphatic ester and metal complexes of cobalt.

For the polymerisation initiator system, it is even more preferable for the initiator to be cumene hydroperoxide 78% in active part and the accelerator to be cobalt naphthenate 8% in active part.

By "cortical consolidation" according to the present invention, we mean the consolidation of a thickness from 1 to 40 mm of material constituting a concrete element, the thickness being assessed as from the outer surface of the element towards its interior.

The cortical consolidation formulations are applied by impregnation on the surfaces of the worn concrete elements and followed by polymerisation in situ.

To provide an effective barrier against aggressive substances carried by the water and to maintain in the long term the cortical consolidation achieved via use of the formulations subject of the present invention, it is preferable to follow up impregnation and polymerisation in situ of said consolidating formulations with further impregnation and polymerisation in situ of waterproofing formulations.

Said waterproofing formulations comprise a mixture of mono- and polyfunctional methacrylic monomers with molecular weight greater than 200 Daltons, with a viscosity η from 3 to 6 mPa·s (η measured with a Brookfield viscosimeter, impeller 2, 30 revolutions per minute (r.p.m.) at a temperature of 20±1 °C), and a polymerisation initiator system comprising an initiator and an accelerator, able to act at ambient temperature, preferably at a temperature above 20°C, said formulations having a glass transition temperature (Tg) above 40°C after polymerisation.

In the waterproofing formulations comprising mono- and polyfunctional methacrylic monomers, the monofunctional methacrylic monomers have a viscosity η of between 3 and 8 mPa·s (η measured with a Brookfield viscosimeter, impeller 2, 30 revolutions per minute (r.p.m.) at a temperature of 23±1°C), in a mixture with at least one polyfunctional methacrylic monomer with viscosity η between 0.5 and 8 mPa·s (η measured with a Brookfield viscosimeter, impeller 2, 30 revolutions per minute (r.p.m.) at a temperature of 23±1°C).

In the waterproofing formulations the preferred monofunctional methacrylic monomer is dicyclopentenyloxyethyl methacrylate (DCPOEMA) while the preferred polyfunctional methacrylic monomer is trimethylolpropane trimethacrylate (TMPTMA).

The waterproofing formulations preferably comprise, as a polymerisation initiator system, a system in which the initiator is an organic peroxide in a quantity from 2 to 5 parts in weight of active material out of 100 parts of mono- and polyfunctional monomer (phm), and the accelerator is a compound of cobalt in a quantity from 0.05 to 0.2 parts in weight of active material out of 100 parts of mono- and polyfunctional monomer (phm).

The peroxide initiator is preferably cumene hydroperoxide and the accelerator is chosen from the group consisting of cobalt naphthenate, cobalt-2-hexanoate in an aliphatic ester and metal complexes of cobalt.

For the polymerisation initiator system, it is even more preferable for the initiator to be cumene hydroperoxide 78% in active part and the accelerator to be cobalt naphthenate 8% in active part.

The waterproofing formulations optionally comprise from 1 to 20 parts by weight of silica precipitate and from 70 to 200 parts by weight of sand per 100 parts by weight of mono- and polyfunctional methacrylic monomers.

Said waterproofing formulations perform a synergetic reinforcing and waterproofing action when combined with the cortical consolidation formulations.

Both, the cortical consolidation formulations and the waterproofing formulations are obtained by mixing their methacrylic monomer components with each other and with the catalyst and accelerator of the polymerisation initiator system; the catalyst and accelerator are either added to the monomer mixture one after the other or one in a first portion of the monomer mixture and the other in a second portion and then combined.

In the preparation of the above formulates, direct contact between the catalyst and the accelerator must be avoided.

The mixing method used for preparation of the formulates of the present invention can be any one of the conventional methods.

The present invention also concerns a kit for the rehabilitation of worn concrete elements comprising:
1) Mono- and polyfunctional methacrylic monomer formulations for cortical consolidation according to the present invention.
2) A polymerisation initiator system comprising a catalyst and an accelerator according to the present invention.
3) Waterproofing formulations as defined above.

The formulations, subject of the present invention, can therefore be used for cortical consolidation of worn concrete elements, permitting recovery of them by means of a reinforcing action.

The invention furthermore concerns, therefore, the process for reinforcement of worn concrete elements comprising: impregnation of said elements with the cortical consolidation formulations followed by their polymerisation in situ.

The application time of the cortical consolidation formulates in the impregnation phase of the concrete elements at 20°C ranges from 90 to 270 minutes in order to allow the product to penetrate the pores of the concrete.

To provide an effective barrier against aggressive substances carried by the water and maintain in the long term the reinforcing action of the cortical consolidation formulations, thus achieving complete rehabilitation of the worn concrete elements, the reinforcement phase is followed by a surface waterproofing phase using the above waterproofing formulations; said formulations make the concrete elements more resistant to the penetration of water, gas and aggressive substances carried by the water.

The application time of the formulates for surface waterproofing of the concrete elements at 20°C ranges from 20 to 40 minutes, since these preparations must complete surface closure of the pores that have been only partially filled by the first treatment. Saturation (i.e. the formulation applied no longer penetrates) with surface filming is rapidly achieved.

The present invention therefore also concerns a process for the restoration of worn concrete elements comprising:
an initial cortical consolidation phase comprising the following steps:
   a) impregnation of the elements with the cortical consolidation formulations according to the present invention
   b) polymerisation in situ of said formulations;
      followed by a second surface waterproofing phase comprising the following steps:
   c) impregnation of the elements treated in points a) and b) with waterproofing formulations as defined above
   d) polymerisation in situ of said waterproofing formulations.

The glass transition temperature (Tg) of the formulations subject of the present invention after their polymerisation was measured by means of Differential Scan Calorimetry (DSC) using a Netsch STA429 calorimeter with heating speed of 10°C/min.

### EXPERIMENTAL PART

### Example 1 - Preparation of the cortical consolidation formulations

The formulations, identified by the codes shown in Table 1, are prepared by mixing: the monofunctional methacrylic monomers chosen from the group comprising tetrahydrofurfuryl methacrylate (THFMA), dicyclopentenyloxyethyl methacrylate (DCPOEMA) and isobornyl methacrylate (MISOBOR); the polyfunctional methacrylic monomers chosen from the group comprising trimethylolpropane trimethacrylate (TMPTMA), ethylene glycol dimethacrylate (EGDMA) and butyl ethylene glycol dimethacrylate (BGDMA); the catalyst cumene hydroperoxide 78% in active part and the accelerator 8% in active part.

Table 1 shows the various methacrylic monomers, and related percentages in weight with respect to the resulting monomer mixture, constituting the formulations produced. In all the formulations described in Table 1, the cumene hydroperoxide is present in 4 parts in weight out of 100 parts in weight of monomer mixture and the cobalt naphthenate is present in 1.2 parts in weight out of 100 parts in weight of monomer mixture.

The monomers are initially mixed with each other under continuous agitation. The cumene hydroperoxide is then added to the monomer mixture, still under agitation, and homogenised, after which the cobalt naphthenate is added and homogenised. Table 1 also gives the viscosities η (mPa·s) measured with a Brookfield viscosimeter, impeller 2, 30 revolutions per minute (r.p.m.) at a temperature of 20±1°C, of the monomer mixtures before addition of the polymerisation system. For most of the formulations described in Table 1, it was not possible to measure the glass transition temperature after polymerisation due to the decomposition, before transition, of the materials as a result of the high percentages of polyfunctional monomers in the starting formulations.

**Table 1:**

| Monomeric composition and viscosity of the cortical consolidation formulations | | |
|---|---|---|
| **Formulation** | Constituent monomers | **η (mPa·s)** |
| A1 | THFMA (70%) + TMPTMA (30%) | 0.87 |
| A2 | THFMA (50%) + EGDMA (20%) + DCPOEMA (30%) | 0.94 |
| A3 | THFMA (40%) + EGDMA (30%) + DCPOEMA (30%) | 0.94 |
| A4 | DCPOEMA (50%) + EGDMA (50%) | 0.69 |
| A5 | DCPOEMA (30%) + EGDMA (70%) | 0.62 |
| A6 | MISOBOR (20%) + TMPTMA (10%) + THFMA (70%) | 0.81 |
| A7 | MISOBOR (15%) + TMPTMA (15%) + THFMA (70%) | 0.81 |
| A9 | EGDMA (30%) + TMPTMA (40%) + THFMA (30%) | 1.06 |
| A10 | EGDMA (70%) + DCPOEMA (30%) | 0.91 |

### Example 2 (comparative)

For comparison a formulation called C1 was prepared consisting, as regards the methacrylic monomer mixture, of the industrial product High Molecular Weight Methacrylate HMWM 1540® (Rohm and Haas). 4 parts in weight of cumene hydroperoxide, out of 100 parts in weight of monomer mixture, and 1.2 parts in weight of cobalt naphthenate, out of 100 parts in weight of monomer mixture, are added to this mixture as in Example 1; said mixture having a viscosity η of 2.6 mPa.s, measured with a Brookfield viscosimeter, impeller 2, 30 revolutions per minute (r.p.m.) at a temperature of 22±2°C. The resulting formulation has a glass transition temperature Tg after polymerisation of between 30°C and 50°C.

### Example 3 - Preparation of the waterproofing formulations

The formulations, identified by the codes shown in Tables 2 and 3, are prepared by mixing with each other: the monofunctional methacrylic monomers dicyclopentenyloxyethyl methacrylate (DCPOEMA), the polyfunctional methacrylic monomers trimethylolpropane trimethacrylate (TMPTMA), the catalyst cumene hydroperoxide 78% in active part, the accelerator cobalt naphthenate 8% in active part and, as shown in Table 3, silica precipitate and sand.

Tables 2 and 3 show the methacrylic monomers, and related percentages in weight with respect to the resulting monomeric mixture, constituting the formulations produced. In all of the formulations described, the cumene hydroperoxide is present in 4 parts in weight out of 100 parts in weight of monomer mixture and the cobalt naphthenate is present in 1.2 parts in weight out of 100 parts in weight of monomer mixture.

For the formulation described, Table 2 also gives the viscosity η (mPa·s) measured with a Brookfield viscosimeter, impeller 2, 30 revolutions per minute (r.p.m.) at a temperature of 20±1°C, of the monomer mixture before addition of the polymerisation system and the glass transition temperature (Tg) measured after polymerisation.

**Table 2:**

| Monomeric composition, viscosity and Tg of the waterproofing formulation Tab. 2 | | | |
|---|---|---|---|
| **Formulation** | **Constituent monomers** | η **(mPa.s)** | **Tg (°C)**^{**(1)**} |
| B1 | DCPOEMA (95%) + TMPTMA (5%) | 3.50 | > 40 |
| measured after polymerisation | | | |

**Table 3:**

| Monomeric composition and contents of silica precipitate and sand in the waterproofing formulations | | | | |
|---|---|---|---|---|
| **Formulations** | **Monomers** | **Silica precipitate** | **Sand 1 (<200 µm)** | **Sand 2 (300-1000 µm)** |
| B2 | DCPOEMA (95%) + TMPTMA (5%) | 15⁽²⁾ | 75⁽²⁾ | 0⁽²⁾ |
| B3 | DCPOEMA (95%) + TMPTMA (5%) | 15⁽²⁾ | 70⁽²⁾ | 120⁽²⁾ |

| | | | | |
|---|---|---|---|---|
| ⁽²⁾ parts in mass out of 100 parts of polymer Sand 1: grains with dimensions < 200 µm Sand 2: grains with dimensions 300-1000 µm | | | | |

### Example 4 - Application time of the formulations

The application times of the cortical consolidation formulations of Example 1, the application times of the comparative formulation of Example 2 and those of the waterproofing formulation of Example 3 were measured at the temperatures of 5°C, 20°C and 40°C.

The application time of the formulates was assessed by visual monitoring of the behaviour of the mixture during detachment from a glass laboratory rod, immersed in and raised from the liquid preparation over a period of time. When detachment of the formulate changed from "dropping", similar to water, to "creeping", similar to oil, a significant increase in viscosity was considered to be in progress, consequently terminating the period of time available for application of the formulations.

**Table 4:**

| Application time of the formulations | | | |
|---|---|---|---|
| | Application time | | |
| Formulation | T=5°C | T=20°C | T=40°C |
| A1 | **4h 35'** | **2h 13'** | **49'** |
| A2 | **4h 29'** | **2h 42'** | **57'** |
| A3 | **4h 11'** | **2h 14'** | **55'** |
| A4 | **2h 36'** | **1h 30'** | **25'** |
| A5 | **4h 42'** | **2h 47'** | **55'** |
| A6 | **>7h 16'** | **3h 30'** | **1h 16'** |
| A7 | **<16h** | **3h** | **1h 04'** |
| A9 | **4h 39'** | **1h 42'** | **42'** |
| A10 | **4h 40'** | **2h 07'** | **40'** |
| C1 | **--** | **1h 10'** | **29'** |
| B1 | **1h 05'** | **25'** | **14'** |

### Example 5 - Reinforcing action of the formulations on mortar supports

The mechanical reinforcement achieved by the treatment with the formulations for cortical consolidation of the concrete element was assessed by flexion test at three points on thin test pieces of mortar with dimensions 16x4x0.4 cm. In this regard, a composition similar to the CEN mortar (EN 196/1) was chosen, increasing the dosage of sand and the water/cement ratio in order to obtain porosity samples as close as possible to the porosity of the worn concrete elements.

The composition is given below:
- cement type 42.5 II/A-L 450 g
- German type standardised sand 1800 g
- water 279 g
- water/cement ratio 0.62
- cement/sand ratio 1/4

Curing of the test pieces was accelerated according to the following method:
- mortar stay time in mould 24 hours at 20°C
- recovery of the test pieces from the molds at 24 hours and immersion thereof in a thermostat-controlled water bath
- heating of the bath from 30°C to 80°C with temperature increases of approx. 10°C/h, temp. kept at 80°C for 15 hours and subsequent cooling by natural thermal exchange.

After accelerated curing of the samples, the surface lactim (thin layer of cement paste) was eliminated by submerging the test pieces in a solution of 20% hydrochloric acid, followed by washing under running water and subsequent drying.

The cortical consolidation formulations, both those of Example 1 and Example 2, were applied by brush in several successive coats at a temperature of 20°C, subsequently keeping them at rest at the same temperature of 20°C for a week in order to permit polymerisation of the products applied.

To measure three-point flexural and breaking strength, an INSTRON dynamometer was used provided with 1 kN or 10 kN loading cell and equipment for flexion tests, with distance of the supports set to 10 cm, operating at a dynamometer traverse speed of 1 mm/minute.

The flexural strength (**Rf**) was determined at a temperature of 20°C, both on the untreated test pieces and on the test pieces after treatment with the formulations. Maintenance of the reinforcing action of the cortical consolidation formulations was checked also after immersion of the treated test pieces in water for 7 days. The increase in strength, resulting from use of the cortical consolidation formulations, is expressed as a ratio **Rf**_{**treated**}**/Rf**_{**untreated**} and shown in Table 5a.

**Table 5a:**

| Increase in flexural strength at 20°C produced in mortar elements by the cortical consolidation formulations. | | |
|---|---|---|
| | **Rf**_{**treated**}**/Rf**_{**untreated**} **(20°C)** | |
| Formulations | Test piece treated dry | Test piece treated after immersion in H₂O for 7 days |
| A1 | 4.5 | 3.3 |
| A2 | 2.8 | 2.2 |
| A3 | 2.6 | 2.2 |
| A4 | 2.8 | 2.9 |
| A5 | 3.5 | 2.5 |
| A6 | 3.4 | 1.9 |
| A7 | 2.8 | 1.9 |
| A9 | 2.3 | 1.9 |
| A10 | 2.7 | 2.2 |
| C1 | 2.1 | 2.1 |
| Dynamometer traverse speed: 1 mm/min | | |
| Rf_{treated} = flexural strength of the test piece after application and polymerisation in situ of the formulations (T= 20°C) | | |
| Rf_{untreated} = flexural strength of the test piece untreated (T= 20°C) | | |

For some formulations, the flexural strength tests were performed also at 50°C, with a dynamometer traverse speed of 0.5 mm/minute. Also at this temperature the increases in flexural strength of the test pieces treated with the formulations of the present invention are significant, as described in Table 5b.

**Table 5b:**

| Increase in flexural strength at 50°C produced in mortar elements by the cortical consolidation formulations. | |
|---|---|
| Formulations | **Rf**_{**treated**}**/Rf**_{**untreated**} **(50°C)** |
| A1 | 1.8 |
| Dynamometer traverse speed: 0.5 mm/min | |
| Rf_{treated} = flexural strength of the test piece after application and polymerisation in situ of the formulations (T= 50°C) | |
| Rf_{untreated} = flexural strength of the test piece untreated (T= 50°C) | |

### Example 6 - Repairing a crack

Mortar test pieces with dimensions 16x4x0.4 cm, identical to those described in o Example 5, were subjected to mechanical breakage via three-point flexural and breaking strength tests, recording the maximum load values reached at breakage. Subsequently they were treated with the formulations A1, A9 and C1 at 20°C, permitting impregnation and subsequent polymerisation in situ. The test pieces "repaired" in this way then underwent three-point flexural strength tests as s described in Example 5.

The test pieces repaired with the formulations A1 and A9 were found to have increased flexural strength.

No increase in flexural strength was found in the test pieces repaired with the formulation C1.

The flexural strength values (**R**_{**flexion**}), measured at 20°C and expressed in newtons (N), of the untreated test pieces (TQ), at the time of breakage, and of the same test pieces repaired (TQ R) and their comparison ratio (**R**_{**f**}**TQ R/ R**_{**f**}**TQ**) are shown in Table 6.

**Table 6:**

| Flexural strength of untreated and repaired test pieces | | |
|---|---|---|
| **Test piece** | **R**_{**flexion**} **(N)** | **R**_{**f**} **TQ R R**_{**f**} **TQ** |
| TQ1 | 15 | -- |
| TQ2 | 17 | -- |
| TQ3 | 15 | -- |
| TQ1 R C1 | 12 | 0.8 |
| TQ2 R A9 | 38 | 2.2 |
| TQ3 R A1 | 46 | 3.1 |
| TQ1 R C1 = test piece TQ1 repaired with C1 | | |
| TQ2 R A9 = test piece TQ2 repaired with A9 | | |
| TQ3 R A1 = test piece TQ3 repaired with A1 | | |
| Dynamometer traverse speed = 0.5 mm/min | | |

### Example 7 - Reinforcing action at increasing polymerisation times

The formulations of Examples 1 and 2 were applied, as described in Example 5, to mortar test pieces with dimensions 16x4x0.4 cm identical to those of Example 5. The flexural strength at 20°C of the test pieces treated with the cortical consolidation formulations was then measured, as described in Example 5, according to the in-situ polymerisation time of the formulations applied at the constant temperature of 20°C.

The increase in flexural strength, according to the in-situ polymerisation time of the cortical consolidation formulations, expressed as a ratio **Rf**_{**treated**}**/Rf**_{**untreated**} is shown in Table 7.

**Table 7:**

| Variation in flexural strength after impregnation of the formulations at different polymerisation times in situ | | | |
|---|---|---|---|
| | **Rf**_{**treated**}**/Rf**_{**untreated**} **(20°C)** | | |
| Formulations | 1 day | 3 days | 7 days |
| A1 | 1.2 | 2.0 | 4.5 |
| A2 | 1.4 | 1.4 | 2.8 |
| A3 | 1.9 | 2.5 | 2.6 |
| A4 | 2.0 | 2.1 | 2.8 |
| A5 | 0.8 | 1.9 | 3.5 |
| A6 | 1.4 | 1.7 | 3.4 |
| A9 | 1.1 | 1.2 | 2.3 |
| A10 | 1.0 | 1.5 | 2.7 |
| C1 | 1.2 | 1.3 | 2.1 |
| (dynamometer traverse speed = 1 mm/min) | | | |
| Rf_{treated} = flexural strength of test piece after application and polymerisation in situ of the formulations (T = 20°C) | | | |
| Rf_{untreated} = flexural strength of test piece untreated (T = 20°C) | | | |

### Example 8 - Reinforcing action of the formulations on concrete

The mechanical reinforcing action of the cortical consolidation formulations was assessed also in samples of concrete. Concrete was produced with the following composition:
- cement type II/A-L 42.5 R : 350 kg/m³
- calcareous aggregate divided into three fractions : 1800 kg/m³
   with respective piece size:
   fraction 0-5 mm = 60%
   fraction 5-8 mm = 14%
   fraction 8-15 mm = 26%
- water (including humidity of the aggregates) : 227.5 kg/m³
- superfluidifying additive (acrylic type) : 820 g/m³
- water/cement ratio : 0.65

After 24 hours in iron moulds, cubes of concrete with dimensions (15 x 15 x 15 cm) and composition as described above were removed from the kiln and left to harden for 28 days, at ambient temperature, covered with a sheet of polyethylene. The flexural strength tests, as described in Example 5, were performed on thin concrete test pieces (dimensions 14 x 4 x 0.5 cm) obtained from working the cortical layer of the above concrete cubes by tool.

Some formulations for cortical consolidation, of Example 1, were applied by brush in several successive coats at a temperature of 20°C, subsequently keeping them at rest at the same temperature of 20°C for approximately two weeks.

The flexural strength (**Rf**) of both the untreated test pieces and those treated with the formulations was measured at 20°C.

The increase in strength, resulting from use of the cortical consolidation formulations, is expressed as a ratio **Rf**_{**treated**}**/Rf**_{**untreated**} and shown in Table 8.

**Table 8:**

| Increase in flexural strength produced in the cortical layer of the concrete cubes by the formulates | |
|---|---|
| **Formulations** | **Rf**_{**treated**}**/Rf**_{**untreated**} **(20°C)** |
| A1 a | 1.5 |
| A1 b | 1.5 |
| (dynamometer traverse speed = 0.5 mm/min) | |
| Rf_{treated} = flexural strength of the test piece after application and polymerisation in situ of the formulations (T = 20°C) | |
| Rf_{untreated} = flexural strength of the test piece untreated (T = 20°C) | |
| a. Application of ∼ 1100 g/m² of formulation | |
| b. Application of ∼ 800 g/m² of formulation | |

### Example 9 - Permeability to water

Permeability to water was assessed by capillary absorption measurements performed according to the NORMAL 11/85 method on mortar test pieces with dimensions 5 x 5 x 5 cm and 4 x 4 x 4 cm with composition identical to those of Example 5.

The capillary absorption coefficient (**Capillary Absor. Coeff.**), which indicates the amount of water in grams absorbed per surface unit in cm² according to the square root of the time expressed in seconds, was measured on test pieces treated, as described in Example 5, only with the cortical consolidation formulations, on test pieces subsequently treated also with the waterproofing formulation B1, applied up to filming at a temperature of 20°C and left to polymerise in situ at said temperature, on test pieces treated with the comparative formulation C1 and on test pieces as they are, i.e. not subjected to any treatment.

The results are summarised in Tables 9 and 10.

**Table 9:**

| Capillary absorption coefficient of test pieces treated only with the cortical consolidation formulations | |
|---|---|
| **Formulations** | **Capillary Absorb. Coeff. (g ·cm**^{**-2**}·**s**^{**-½**} **·10**^{**-3**}**)** |
| A1 | 2.05 |
| A5 | 2.34 |
| A6 | 1.95 |
| A10 | 1.90 |

**Table 10:**

| Capillary absorption coefficient of test pieces treated with the cortical consolidation formulations and the surface waterproofing formulation | |
|---|---|
| **Formulations** | **Capillary Absorb. Coeff. (g ·cm**^{**-2**} **· s**^{**-½**} **·10**^{**-3**}**)** |
| C1 | 0.53 |
| A1 + B1 | 0.16 |
| A5+ B1 | 0.15 |
| A6+ B1 | 0.27 |
| A10+ B1 | 0.19 |
| Untreated test piece | 2.30 |

## Claims

1. Formulations for cortical consolidation of worn concrete elements comprising a mixture of mono- and polyfunctional methacrylic monomers, with molecular weight greater than 150 Daltons, said mixture having a viscosity at a temperature of 20 ± 1°C from 0.5 to 2 mPa·s, and a polymerisation initiator system comprising an inhitiator and an accelerator, able to act at ambient temperature, preferably at a temperature above 20°C.

2. Formulations according to claim 1 having a glass transition temperature (Tg) above 60°C after polymerisation.

3. Formulations according to claim 2 in which the glass transition temperature (Tg) is above 70°C after polymerisation.

4. Formulations according to claim 3 in which the glass transition temperature (Tg) is above 100°C after polymerisation.

5. Formulations according to claim 1 in which the said mono- and polyfunctional methacrylic monomers comprise monofunctional methacrylic monomers having a viscosity at a temperature of 23 ± 1°C between 0.5 and 5 mPa· in a mixture with at least one polyfunctional methacrylic monomer having a viscosity at a temperature of 23 ± 1°C between 0.5 and 8 mPa·s.

6. Formulations according to claim 5 in which the monofunctional methacrylic monomers are chosen from the group consisting of tetrahydrofurfuryl methacrylate (THFMA), dicyclopentenyloxyethyl methacrylate (DCPOEMA) and isobornyl methacrylate (MISOBOR).

7. Formulations according to claim 5 in which the polyfunctional methacrylic monomers are chosen from the group consisting of trimethylolpropane trimethacrylate (TMPTMA), ethylene glycol dimethacrylate (EGDMA) and butyl ethylene glycol dimethacrylate (BGDMA).

8. Formulations according to claim 1 in which, in the polymerisation initiator system, the initiator is an organic peroxide in a quantity from 2 to 5 parts in weight of active material out of 100 parts of mono- and polyfunctional monomer (phm) and the accelerator is a compound of cobalt in a quantity from 0.05 to 0.2 parts in weight of active material out of 100 parts of mono- and polyfunctional monomer (phm).

9. Formulations according to claim 8 in which the peroxide initiator is cumene hydroperoxide and the accelerator is chosen from the group consisting of cobalt naphthenate, cobalt-2-ethylhexanoate in an aliphatic ester and metal complexes of cobalt.

10. Formulations according to claim 9 in which the initiator is cumene hydroperoxide 78% in active part and the accelerator is cobalt naphthenate 8% in active part.

11. Kit for restoration of worn concrete elements comprising:
1) a formulation for cortical consolidation according to claim 1;
2) waterproofing formulations comprising a mixture of mono- and polyfunctional methacrylic monomers with molecular weight greater than 200 Daltons, said mixture having a viscosity at a temperature of 20 ± 1°C from 3 to 6 mPa·s, and a polymerisation initiator system comprising an initiator and an accelerator, able to act at ambient temperature, preferably at a temperature above 20°C, said formulations having a glass transition temperature (Tg) above 40°C after polymerisation.

12. Kit according to claim 11 in which the waterproofing formulations for mono- and polyfunctional methacrylic monomers comprise monofunctional methacrylic monomers having a viscosity at a temperature of 23 ± 1°C between 3 and 8 mPa·s in a mixture with at least one polyfunctional methacrylic monomer having a viscosity at a temperature of 23 ± 1°C between 0.5 and 8 mPa·s.

13. Kit according to claim 12 in which in the waterproofing formulations the monofunctional methacrylic monomer is dicyclopentenyloxyethyl methacrylate (DCPOEMA) and the polyfunctional methacrylic monomer is trimethylolpropane trimethacrylate (TMPTMA).

14. Kit according to claim 11 in which in the polymerisation initiator system of the waterproofing formulations, the initiator is an organic peroxide in a quantity from 2 to 5 parts in weight of active material out of 100 parts of mono- and polyfunctional monomer (phm) and the accelerator is a compound of cobalt in a quantity from 0.05 to 0.2 parts in weight of active material out of 100 parts of mono- and polyfunctional monomer (phm).

15. Kit according to claim 14 in which in the waterproofing formulations the peroxide initiator is cumene hydroperoxide and the accelerator is chosen from the group consisting of cobalt naphthenate, cobalt-2- ethylhexanoate in an aliphatic ester and metal complexes of cobalt.

16. Kit according to claim 15 in which in the waterproofing formulations the catalyst is cumene hydroperoxide 78% in active part and the accelerator is cobalt naphthenate 8% in active part.

17. Kit according to claim 11 in which the waterproofing formulations comprise: from 1 to 20 parts by weight of silica precipitate and from 70 to 200 parts by weight of sand per 100 parts by weight of mono- and polyfunctional methacrylic monomers.

18. Process for "cortical consolidation" of worn concrete elements comprising impregnation of the elements with the formulations according to claim 1 followed by their polymerisation "in situ".

19. Process according to claim 18 in which impregnation of the elements occurs at 20°C for a time of between 90 and 270 minutes.

20. Process for restoration of worn concrete elements comprising: an initial cortical consolidation phase with:
a) impregnation of the elements with formulations for cortical consolidation according to claim 1;
b) polymerisation in situ of said formulations; followed by a second surface waterproofing phase with:
c) impregnation of the elements treated in points a) and b) with waterproofing formulations having a glass transition temperature (Tg) above 40°C after polymerisation comprising a mixture of mono- and polyfunctional methacrylic monomers, with molecular weight greater than 200 Daltons, said mixture having a viscosity at a temperature of 20 ± 1°C from 3 to 6 mPa·s, and a polymerisation initiator system comprising a catalyst and an accelerator;
d) polymerisation in situ of said waterproofing formulations.

21. Process according to claim 20 in which the impregnation in point a) occurs at 20°C for a time between 90 and 240 minutes and the impregnation in point c) occurs at 20°C for a time between 20 and 40 minutes.

## Patentansprüche

1. Zusammensetzungen zur Wiederherstellung der Oberfläche von angegriffenen Betonelementen, umfassend ein Gemisch aus mono- und multifunktionellen Methacrylmonomeren mit einem Molekulargewicht von mehr als 150 Dalton, wobei das genannte Gemisch bei einer Temperatur von 20 ± 1 °C eine Viskosität von 0,5 bis 2 mPa·s besitzt, sowie ein Polymerisationsinitiatorsystem, umfassend einen Initiator und einen Beschleuniger, das seine Wirkung bei Umgebungstemperatur, vorzugsweise bei einer Temperatur über 20 °C entfalten kann.

2. Zusammensetzungen gemäß Anspruch 1, die nach der Polymerisation eine Glasumwandlungstemperatur (Tg) über 60 °C besitzen.

3. Zusammensetzungen gemäß Anspruch 2, wobei die Glasumwandlungstemperatur (Tg) nach der Polymerisation über 70 °C beträgt.

4. Zusammensetzungen gemäß Anspruch 3, wobei die Glasumwandlungstemperatur (Tg) nach der Polymerisation über 100 °C beträgt.

5. Zusammensetzungen gemäß Anspruch 1, wobei die genannten mono- und polyfunktionellen Methacrylmonomere monofunktionelle Methacrylmonomere umfassen, die bei einer Temperatur von 23 ± 1 °C eine Viskosität zwischen 0,5 und 5 mPa·s besitzen, in einem Gemisch mit wenigstens einem polyfunktionellen Methacrylmonomer, das bei einer Temperatur von 23 ± 1 °C eine Viskosität zwischen 0,5 und 8 mPa·s besitzt.

6. Zusammensetzungen gemäß Anspruch 5, wobei die monofunktionellen Methacrylmonomere aus der folgenden Gruppe ausgewählt sind: Tetrahydrofurfurylmethacrylat (THFMA), Bicyclopentenyloxyethylmethacrylat (BCPOEMA) und Isobornylmethacrylat (MISOBOR).

7. Zusammensetzungen gemäß Anspruch 5, wobei die polyfunktionellen Methacrylmonomere aus der folgenden Gruppe ausgewählt sind: Trimethylolpropantrimethacrylat (TMPTMA), Ethylenglycoldimethacrylat (EGDMA) und Butylethylenglycoldimethacrylat (BGDMA).

8. Zusammensetzungen gemäß Anspruch 1, wobei in dem Polymerisationsinitiatorsystem der Initiator ein organisches Peroxid in einer Menge von 2 bis 5 Gewichtsteilen aktiven Materials je 100 Teile mono- und polyfunktioneller Monomere (phm) und der Beschleuniger eine Cobaltverbindung in einer Menge von 0,05 bis 0,2 Gewichtsteilen aktiven Materials je 100 Teile mono- und polyfunktioneller Monomere (phm) ist.

9. Zusammensetzungen gemäß Anspruch 8, wobei der Peroxid-Initiator Cumenhydroperoxid ist und der Beschleuniger aus der folgenden Gruppe ausgewählt ist: Cobaltnaphthenat, Cobalt-2-ethylhexanoat in einem aliphatischen Ester und Metallkomplexen von Cobalt.

10. Zusammensetzungen gemäß Anspruch 9, wobei der Anteil des Initiators Cumenhydroperoxid im aktiven Teil 78 % beträgt und der Anteil des Beschleunigers Cobaltnaphthenat im aktiven Teil 8 % beträgt.

11. Ausstattung zur Restaurierung von angegriffenen Betonelementen, umfassend:
1) Zusammensetzung zur Wiederherstellung der Oberfläche gemäß Anspruch 1;
2) Gegen Wasser abdichtende Zusammensetzungen, umfassend ein Gemisch von mono- und polyfunktionellen Methacrylmonomeren mit einem Molekulargewicht von mehr als 200 Dalton, wobei das genannte Gemisch bei einer Temperatur von 20 ± 1 °C eine Viskosität von 3 bis 6 mPa·s besitzt, sowie ein Polymerisationsinitiatorsystem, umfassend einen Initiator und einen Beschleuniger, das seine Wirkung bei Umgebungstemperatur, vorzugsweise bei einer Temperatur über 20 °C entfalten kann, wobei die genannten Zusammensetzungen nach der Polymerisation eine Glasumwandlungstemperatur (Tg) über 40 °C besitzen.

12. Ausstattung gemäß Anspruch 11, wobei die gegen Wasser abdichtenden Zusammensetzungen von mono- und polyfunktionellen Methacrylmonomeren monofunktionelle Methacrylmonomere umfassen, die bei einer Temperatur von 23 ± 1 °C eine Viskosität zwischen 3 und 8 mPa·s besitzen, in einem Gemisch mit wenigstens einem polyfunktionellen Methacrylmonomer, das bei einer Temperatur von 23 ± 1 °C eine Viskosität zwischen 0,5 und 8 mPa·s besitzt.

13. Ausstattung gemäß Anspruch 12, wobei in den gegen Wasser abdichtenden Zusammensetzungen das monofunktionelle Methacrylmonomer Bicyclopentenyloxyethylmethacrylat (BCPOEMA) und das polyfunktionelle Methacrylmonomer Trimethylolpropantrimethacrylat (TMPTMA) ist.

14. Ausstattung gemäß Anspruch 11, wobei in dem Polymerisationsinitiatorsystem der gegen Wasser abdichtenden Zusammensetzungen der Initiator ein organisches Peroxid in einer Menge von 2 bis 5 Gewichtsteilen aktiven Materials je 100 Teile monound polyfunktioneller Monomere (phm) und der Beschleuniger eine Cobaltverbindung in einer Menge von 0,05 bis 0,2 Gewichtsteilen aktiven Materials je 100 Teile monound polyfunktioneller Monomere (phm) ist.

15. Ausstattung gemäß Anspruch 14, wobei in den gegen Wasser abdichtenden Zusammensetzungen der Peroxid-Initiator Cumenhydroperoxid ist und der Beschleuniger aus der folgenden Gruppe ausgewählt ist: Cobaltnaphthenat, Cobalt-2-ethylhexanoat in einem aliphatischen Ester und Metallkomplexen von Cobalt.

16. Ausstattung gemäß Anspruch 15, wobei in den gegen Wasser abdichtenden Zusammensetzungen der Anteil des Katalysators Cumenhydroperoxid im aktiven Teil 78 % beträgt und der Anteil des Beschleunigers Cobaltnaphthenat im aktiven Teil 8 % beträgt.

17. Ausstattung gemäß Anspruch 11, wobei die gegen Wasser abdichtenden Zusammensetzungen umfassen: 1 bis 20 Gewichtsteile gefällte Silica und 70 bis 200 Gewichtsteile Sand je 100 Gewichtsteile mono- und polyfunktionaler Methacrylmonomere.

18. Verfahren zur "Wiederherstellung der Oberfläche" von angegriffenen Betonelementen, umfassend die Imprägnierung der Elemente mit den Zusammensetzungen gemäß Anspruch 1 gefolgt von deren Polymerisation vor Ort.

19. Verfahren gemäß Anspruch 18, wobei die Imprägnierung der Elemente bei 20 °C über eine Dauer von 90 bis 270 Minuten erfolgt.

20. Verfahren zur Restaurierung von angegriffenen Betonelementen, umfassend:
eine einleitende Phase der Oberflächenwiederherstellung mit:
a) Imprägnierung der Elemente mit Zusammensetzungen zur Wiederherstellung der Oberfläche gemäß Anspruch 1;
b) Vor-Ort-Polymerisation der genannten Zusammensetzungen; gefolgt von einer zweiten Phase der Abdichtung gegen Wasser mit:
c) Imprägnierung der in den Punkten a) und b) behandelten Elemente mit gegen Wasser abdichtenden Zusammensetzungen, die nach der Polymerisation eine Glasumwandlungstemperatur (Tg) über 40 °C besitzen, umfassend ein Gemisch von mono- und polyfunktionellen Methacrylmonomeren mit einem Molekulargewicht von mehr als 200 Dalton, wobei das genannte Gemisch bei einer Temperatur von 20 ± 1 °C eine Viskosität von 3 bis 6 mPa·s besitzt, sowie ein Polymerisationsinitiatorsystem, umfassend einen Katalysator und einen Beschleuniger;
d) Vor-Ort-Polymerisation der genannten gegen Wasser abdichtenden Zusammensetzungen.

21. Verfahren gemäß Anspruch 20, wobei die Imprägnierung in Punkt a) bei 20 °C über eine Dauer von 90 bis 240 Minuten erfolgt und die Imprägnierung in Punkt c) bei 20 °C über eine Dauer von 20 bis 40 Minuten erfolgt.

## Revendications

1. Formulations pour consolidation corticale d'éléments en béton usés comprenant un mélange de monomères méthacryliques mono- et polyfonctionnels avec un poids moléculaire plus grand que 150 Daltons, ledit mélange ayant une viscosité à une température de 20 ± 1°C de 0,5 à 2 mPa.s et un système initiateur de polymérisation comprenant un initiateur et un accélérateur, capable d'agir à température ambiante, de préférence à une température au-dessus de 20°C.

2. Formulations selon la revendication 1 ayant une température de transition vitreuse (Tg) au-dessus de 60°C après polymérisation.

3. Formulations selon la revendication 2 dans lesquelles la température de transition vitreuse (Tg) est au-delà de 70°C après polymérisation.

4. Formulations selon la revendication 3 dans lesquelles la température de transition vitreuse (Tg) est au-delà de 100°C après polymérisation.

5. Formulations selon la revendication 1 dans lesquelles lesdits monomères méthacryliques mono- et polyfonctionnels comprennent des monomères méthacryliques monofonctionnels ayant une viscosité à une température de 23 ± 1°C comprise entre 0,5 et 5 mPa en un mélange avec au moins un monomère méthacrylique polyfonctionnel ayant une viscosité à une température de 23 ± 1°C comprise entre 0,5 et 8 mPa.s.

6. Formulations selon la revendication 5 dans lesquelles les monomères méthacryliques monofonctionnels sont choisis dans le groupe consistant en tétrahydrofurfuryl méthacrylate (THFMA), dicyclopentényloxyéthyl méthacrylate (DCPOEMA) et isobornyl méthacrylate (MISOBOR).

7. Formulations selon la revendication 5 dans lesquelles les monomères méthacryliques polyfonctionnels sont choisis dans le groupe consistant en triméthacrylate de triméthylolpropane, (TMPTMA), diméthacrylate d'éthylène glycol (EGDMA) et diméthacrylate de butyl éthylène glycol (BGDMA).

8. Formulations selon la revendication 1 dans lesquelles, dans le système initiateur de polymérisation, l'initiateur est un peroxyde organique en une quantité de 2 à 5 parties en poids de matière active sur 100 parties du monomère mono- et polyfonctionnel (phm) et l'accélérateur est un composé de cobalt en une quantité de 0,05 à 0,2 partie en poids de la matière active sur 100 parties du monomère mono- et polyfonctionnel (phm).

9. Formulations selon la revendication 8 dans lesquelles l'initiateur de peroxyde est de l'hydroxypéroxyde de cumène et l'accélérateur est choisi dans le groupe consistant en naphténate de cobalt, cobalt-2-éthylhexanoate dans un ester aliphatique et des complexes de métaux de cobalt.

10. Formulations selon la revendication 9 dans lesquelles l'initiateur est de l'hydropéroxyde de cumène 78% en partie active et l'accélérateur est napthénate de cobalt 8% en partie active.

11. Kit pour la restauration d'éléments de béton usés comprenant:
1) une formulation pour la consolidation corticale selon la revendication 1;
2) des formulations d'imperméabilisation comprenant un mélange de monomères méthacryliques mono- et polyfonctionnels avec un poids moléculaire plus grand que 200 Daltons, ledit mélange ayant une viscosité à une température de 20 ± 1°C de 3 à 6 mPa.s et un système initiateur de polymérisation comprenant un initiateur et un accélérateur capable d'agir à température ambiante, de préférence à une température au-dessus de 20°C, lesdites formulations ayant une température de transition vitreuse (Tg) au-dessus de 40°C après polymérisation.

12. Kit selon la revendication 11 dans lequel les formulations d'imperméabilisation pour les monomères méthacryliques mono- et polyfonctionnels comprennent des monomères méthacryliques monofonctionnels ayant une viscosité à une température de 23 ± 1°C comprise entre 3 et 8 mPa.s dans un mélange avec au moins un monomère méthacrylique polyfonctionnel ayant une viscosité à une température de 23 ± 1°C comprise entre 0,5 et 8 mPa.s.

13. Kit selon la revendication 12 dans lequel dans les formulations d'imperméabilisation, le monomère méthacrylique monofonctionnel est dicyclopentényloxyéthyl méthacrylate (DCPOEMA) et le monomère méthacrylique polyfonctionnel est triméthacrylate de triméthylolpropane (TMPTMA).

14. Kit selon la revendication 11 dans lequel, dans le système initiateur de polymérisation des formulations d'imperméabilisation, l'initiateur est un peroxyde organique en une quantité de 2 à 5 parties en poids de matière active sur 100 parties du monomère mono- et polyfonctionnel (phm) et l'accélérateur est un composé de cobalt en une quantité de 0,05 à 0,2 partie en poids de matière active sur 100 parties du monomère mono- et polyfonctionnel (phm).

15. Kit selon la revendication 14 dans lequel, dans les formulations d'imperméabilisation, l'initiateur de peroxyde est de l'hydropéroxyde de cumène et l'accélérateur est choisi dans le groupe consistant en naphténate de cobalt, cobalt-2- éthylhexanoate dans un ester aliphatique et des complexes de métaux de cobalt.

16. Kit selon la revendication 15 dans lequel, dans les formulations d'imperméabilisation, le catalyseur est du peroxyde de cumène 78% en partie active et l'accélérateur est du napthénate de cobalt 8% en partie active.

17. Kit selon la revendication 11 dans lequel les formulations d'imperméabilisation comprennent: de 1 à 20 parties en poids d'un précipité de silice et de 70 à 200 parties en poids de sable pour 100 parties en poids des monomères méthacryliques mono- et polyfonctionnels.

18. Procédé pour la "consolidation corticale" d'éléments en béton usés comprenant l'imprégnation des éléments par les formulations selon la revendication 1 avec ensuite leur polymérisation "in situ".

19. Procédé selon la revendication 18 dans lequel l'imprégnation des éléments se produit à 20°C pendant un temps compris entre 90 et 270 minutes.

20. Procédé pour la restauration d'éléments en béton usés comprenant:
une phase de consolidation corticale initiale avec:
a) l'imprégnation des éléments par des formulations pour la consolidation corticale selon la revendication 1;
b) la polymérisation in situ desdites formulations; avec ensuite une seconde phase d'imperméabilisation de surface avec:
c) imprégnation des éléments traités aux points a) et b) avec des formulations d'imperméabilisation ayant une température de transition vitreuse (Tg) au-delà de 40°C après polymérisation, comprenant un mélange de monomères méthacryliques mono- et polyfonctionnels avec un poids moléculaire plus grand que 200 Daltons, ledit mélange ayant une viscosité à une température de 20 ± 1°C, de 3 à 6 mPa.s et un système initiateur de polymérisation comprenant un catalyseur et un accélérateur;
d) la polymérisation in situ desdites formulations d'imperméabilisation.

21. Procédé selon la revendication 20, dans lequel l'imprégnation au point a) se produit à 20°C pendant un temps compris entre 90 et 240 minutes et l'imprégnation au point c) se produit à 20°C pendant un temps compris entre 20 et 40 minutes.
